Europäisches Patentamt

(19) European Patent Office    (11) Publication number: **0 225 689**
**B1**
Office européen des brevets

(12)    **EUROPEAN PATENT SPECIFICATION**

(45) Date of publication of the patent specification:
**11.04.90**

(21) Application number: **86306848.2**

(22) Date of filing: **04.09.86**

(51) Int. Cl.⁴: **A01G 3/02, B25B 7/08,**
**B26B 19/28**

(54) **A hand tool, such as a garden pruner.**

(30) Priority: **16.11.85 GB 8528284**

(43) Date of publication of application:
**16.06.87 Bulletin 87/25**

(45) Publication of the grant of the patent:
**11.04.90 Bulletin 90/15**

(84) Designated Contracting States:
**AT BE CH DE FR GB IT LI NL SE**

(56) References cited:
**DE-U- 6 926 456**
**US-A- 1 453 603**
**US-A- 3 021 585**
**US-A- 3 609 863**

(73) Proprietor: **FISKARS LIMITED, Brocastle Avenue**
**Waterton Industrial Estate, Bridgend,**
**Mid-Glamorgan(GB)**

(72) Inventor: **Cook, Anthony George, 9, Trepit Road Wick Nr.**
**Cowbridge, South Clamorgan CF7 7QL Wales(GB)**

(74) Representative: **Knott, Stephen Gilbert et al,**
**MATHISEN, MACARA & CO. The Coach**
**House 6-8 Swakeleys Road, Ickenham Uxbridge**
**Middlesex UB10 8BZ(GB)**

## Description

This invention relates to a hand tool, such as a garden pruner, of the type in which two members, each including a handle are interconnected by pivot means and are urged angularly apart by a spring, such that when the handles are gripped in the hand of a user, the tool can be closed against the spring force, and opened by the spring force.

The parts of such a tool, including the pivot means which usually comprise an interengaging nut and bolt or equivalent device, are subject to wear with the result that the pivot means and hence the members, become slack, and the tool works less efficiently. Again, the pivot means can become slack due to continued relative movement between its parts. Tightening of the pivot means is not always easy and can result in over-tightening of the members and consequently loss of efficiency.

According to the present invention there is provided a hand tool, for example a garden pruner, comprising two members, each member comprising a blade or other work-engaging portion and a handle rigidly secured thereto, pivot means pivotally interconnecting said members, and a spring urging the members angularly apart, the pivot means comprising two screw-threaded parts mounted in mutual engagement and connected to said members to press said members against one another, a worm screw rotatably mounted in a support, the support being secured to a first of said screw-threaded parts, a gear in meshing engagement with said worm screw, said gear being fixed to the second screw-threaded part for rotation of the worm screw relative to said support causes relative rotation of the screw-threaded parts thereby varying the pressure of one member against the other member.

A tool of the type to which the present invention relates frequently is provided with a catch on one said member and engageable in any one of a number of steps in the other member to prevent opening of the tool beyond any selected one of a number of positions. Such number of positions is usually very limited.

According to another aspect of the invention there is provided a hand tool, for example a garden pruner, comprising two members, each member comprising a blade or other work-engaging portion and a handle rigidly secured thereto, pivot means pivotally interconnecting said members, and a spring urging the members angularly apart wherein one of said members has a catch rotatably mounted thereon the catch having a cam surface thereon which is non circular about the axis of the catch, and the other of said members has a curved surface thereon which is generally circular about the axis of the catch by distances which increase with increasing angular opening of the members, the catch being rotatable to bring the cam surface of the catch into engagement with said curved surface of the other of said members to prevent further angular separation of the members.

The invention will now be particularly described, by way of example only, with reference to the accompanying drawings in which:-

Figure 1 is a side elevation of a garden pruner in accordance with the invention;

Figures 2 and 3 are side elevations of the pruner of Figure 1 as seen from the opposite side, to an enlarged scale, with the handles part cut-away, and showing the blades in two angularly different open positions depending on the different positions of a catch;

Figure 4 is a section on the line IV-IV of Figure 1;

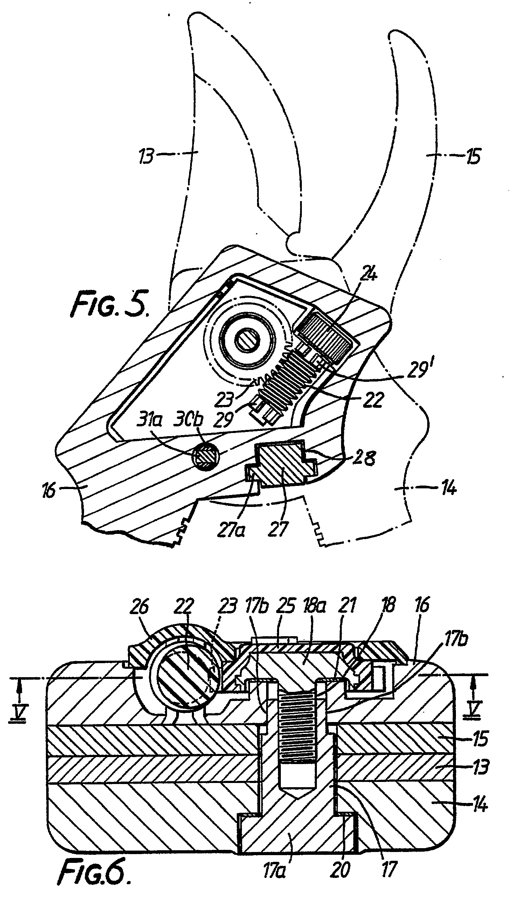

Figure 5 is a section through the pruners on the line V-V of Figure 6, and

Figure 6 is a cross-section through the pruners in a plane containing the axis of the pivot means.

The pruner shown in the drawings comprises two members 11,12 one formed by a blade 13 and handle 14 and the other by a blade 15 and handle 16. The members are pivotally interconnected in the conventional way, by a pivot assembly which, in the illustrated embodiment comprises a bolt 17 having a tubular internally screwthreaded shank and a head 17a and a screw 18 which engages within the bolt and is formed with a head 18a, the two heads 17a,18a engaging the outer surfaces of the respective members 11,12, through washers 20, 21 to urge the members, in particular the blades into tight contact with one another.

For ease of manufacture and assembly each handle overlaps and is rigidly secured to its associated blade and, as seen in Figure 6, the pivot assembly passed through superimposed apertures in the overlapping portions of the two handles. The head 17a of the bolt is of circular shape, but the bolt itself has flats 17b thereon for engagement with corresponding flats in the pivot bolt apertures of the handle 16 to prevent relative rotation between handle 16 and bolt 17.

In a recess in the handle 16, a worm screw 22 is journalled for rotation about its longitudinal axis in a support 29, 29' on handle 16, and meshes with the teeth of a gear wheel 23 mounted or formed to encircle the head 18a of the screw 18. At one end of the worm screw is a knurled knob 24 integral with the worm screw, so that by rotating the knob a small rotational displacement of the pivot screw relative to the pivot bolt, and hence a tightening or slackening of the pivot assembly is effected.

The gear wheel 23 can be a plastics part integral with a cap 25 which fits tightly over, or preferably is moulded on to, the head 18a of the screw 18 for rotation therewith. Such a cap can include a pointer or other indicator 25a extending radially thereacross to provide an indication of the position of, or movement of, the screw relative to the bolt.

The worm screw can be protected by a plastics cover 26 which fits over the worm screw 22 and gear 23 but with openings therein through which the knurled knob 24 and cap 25 project outwardly.

The gear 23 will normally be held rigid with the member 11 since movement of the gear 23 relative to the member 11 will occur only as a result of rotation of the worm screw 22. Moreover, the friction in the bearings of the worm screw, and the mechanical advantage and friction in the worm and gear assembly, will be such that inadvertant rotation of the worm screw will not occur.

The gear ratio between the worm screw 22 and gear 23 can be made sufficiently large to give very fine adjustment of the relative axial positions of the screw and bolt of the pivot assembly and hence very fine adjustment of the pressure between the members. Once adjusted, the screw and bolt will be locked in the adjusted position by the worm and gear assembly.

A locking member 27 of somewhat barrel shape is journalled on eccentrically positioned lugs 27a in one of the members, and is rotatable by finger pressure to engage in a corresponding recess 28 in the other of the members to lock the members in the closed position.

A separate catch is provided for preventing opening of the members beyond selected positions. This catch 30 is rotatably mounted in member 12 for rotation about an axis parallel to that of the pivot assembly, and is movable by a thumb lever 30a secured thereto. The lever 30a is conveniently located in an arcuate recess in the cover 26.

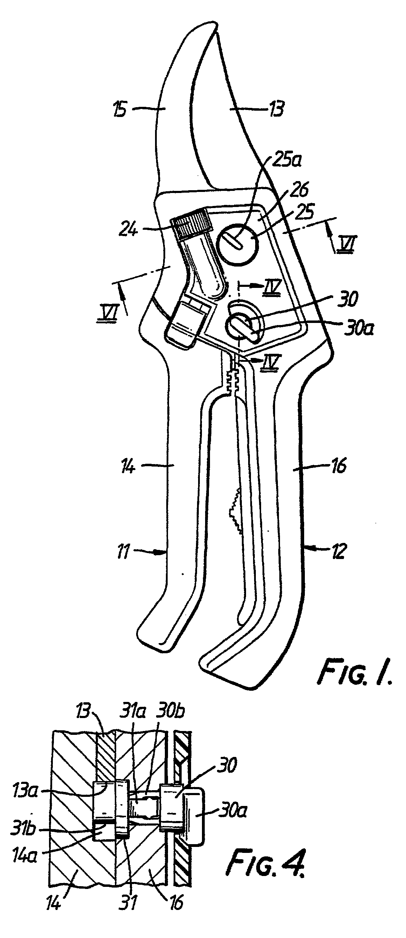

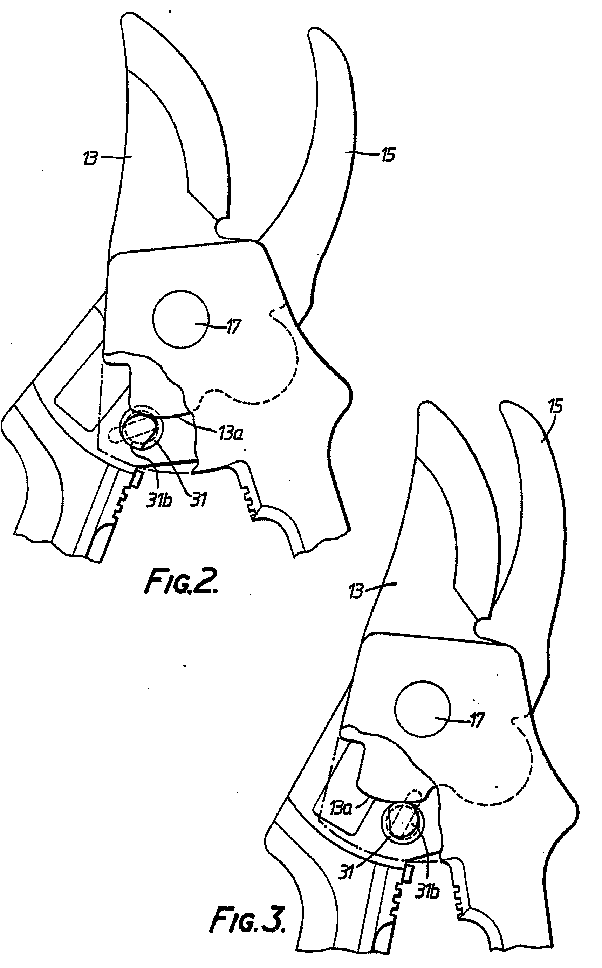

As seen in Figure 4, a catch rotor 31 is disposed on the opposite side of handle 16 and has a shank portion 31a which engages removably in the hollow interior of a shank portion 30b of the catch 30. The rotor 31 has a cam surface 31b thereon which rides in an arcuate recess 14a in handle 14, one side of the recess 14a being bounded by an edge surface 13a of blade 13.

The edge surface 13a is curved and generally arcuate about the axis of the pivot assembly but is spaced from the axis of the catch by distances which increases with increasing angular opening of the members, and the catch is rotatable to bring the cam surface 31b into engagement with said curved surface 13a in any selected position of the members to prevent further angular opening of the members as a result of the wedge action of the surface 13a against the cam surface 31b of the catch rotor 31. Figures 2 and 3 show differential rotational positions of the catch 30 and the different open positions of the blades 13,15 at which the cam surface 31b engages blade surface 13a to halt the opening of the blades.

A part of the cam surface 31b can be flat to allow the catch rotor 31 to be located clear of the surface 13a of the blade 13.

## Claims

1. A hand tool, for example a garden pruner, comprising two members (11, 12), each member comprising a blade (13, 15) or other work-engaging portion and a handle (14, 16) rigidly secured thereto, pivot means pivotally interconnecting said members, and a spring urging the members angularly apart, the pivot means comprising two screw-threaded parts (17, 18) mounted in mutual engagement and connected to said members (11, 12) to press said members against one another, characterised by a worm screw (22) rotatably mounted in a support (29, 29'), the support being secured to a first part (17) of said screw-threaded parts, a gear (23) in meshing engagement with said worm screw (22) said gear being fixed to the second screw-threaded part (18) for rotation therewith, and the arrangement being such that rotation of the worm screw (22) relative to said support (29, 29') causes relative rotation of the screw-threaded parts (17, 18) thereby varying the pressure of one member (11) against the other member (12).

2. A hand tool according to claim 1 characterised in that a knurled knob (24) is secured to the worm screw (22) at one end thereof.

3. A hand tool according to claim 1 or claim 2 characterised in that a cap (25), secured to the second screw-threaded part (18) and exposed to view, carries an indicator mark (25a) whereby the direction of rotation of the indicator mark indicates whether the pressure of one member against the other is being increased or decreased.

4. A hand tool according to any preceding claim characterised in that one of said members (11, 12) has a catch (30) rotatably mounted thereon the catch having a cam surface (31b) thereon which is non circular about the axis of the catch, and the other of said members has a curved surface (13a) thereon which is generally arcuate about the axis of the pivot means but which is spaced from the axis of the catch by distances which increase with increasing angular opening of the members, the catch being rotatable to bring the cam surface of the catch into engagement with said curved surface of the other of said members in any selected relative position of the members to prevent further angular separation of the members.

## Patentansprüche

1. Handwerkzeug, beispielsweise eine Gartenschere, mit zwei Elementen (11, 12), wovon jedes Element eine Klinge (13, 15) oder einen anderen Arbeitsangriffsabschnitt und einen starr daran befestigten Handgriff (14, 16) enthält, einer die Elemente schwenkbar miteinander verbindendem Drehgelenkeinrichtung und einer die Elemente winkelmäßig auseinander drängenden Feder, wobei das Drehgelenk zwei in gegenseitigem Eingriff stehende und mit den Elementen (11, 12) verbundene mit Schraubengewinden versehene Teile (17, 18) aufweist, um die Elemente gegeneinander zu pressen, gekennzeichnet, durch eine drehbar in einer Halterung (29, 29'), die an einem ersten Teil (17) der mit Schraubengewinden versehenen Teile befestigt ist, drehbar angeordneten Schnecke (22), sowie ein in kämmenden Eingriff mit der Schnecke (22) stehendes Zahnrad, das an dem zweiten mit einem Schraubengewinde versehenen Teil (18) zur Drehung mit diesem befestigt ist, wobei die Anordnung derart ist, daß die Drehung der Schnecke (22) gegenüber der Halterung (29, 29') eine Relativdrehung der mit Schraubengewinden versehenen Teile (17, 18) verursacht und dadurch den Druck eines Elementes (11) gegen das andere Element (12) verändert.

2. Handwerkzeug nach Anspruch 1, dadurch gekennzeichnet, daß ein gerändelter Knopf (24) an der Schnecke (22) an einem von deren Enden befestigt ist.

3. Handwerkzeug nach Anspruch 1 oder 2, dadurch gekennzeichnet, daß eine an dem zweiten mit Schraubengewinde versehenen Teil (18) befestigte und der Sicht ausgesetzte Klappe (25) eine Anzeigemarke (25a) trägt, wodurch die Drehungsrichtung der Anzeigemarke anzeigt, ob der Druck eines Elementes gegen das andere vergrößert oder verringert wird.

4. Handwerkzeug nach einem vorhergehenden Anspruch, dadurch gekennzeichnet, daß eines der Elemente (11, 12) eine an ihm drehbar angeordnete Sperre (30) mit einer daran ausgebildeten nicht kreisförmig um die Achse der Sperre verlaufenden Nockenoberfläche (31b) aufweist und das andere der Elemente eine gebogene Oberfläche 13a aufweist, die etwa um die Achse des Drehgelenks gebogen aber von der Achse der Sperre um Abstände entfernt ist, die mit zunehmender Winkelöffnung der Elemente größer werden, wobei die Sperre drehbar ist, um die Nockenoberfläche der Sperre in Eingriff mit der gebogenen Oberfläche des anderen der Elemente in einer ausgewählten Relativposition der Elemente zu bringen, um eine weitere winkelmäßige Trennung der Elemente zu verhindern.

**Revendications**

1. Outil à main, par exemple des ciseaux de jardinage, comprenant deux éléments (11, 12), chaque élément comprenant une lame (13, 15) ou autre partie de travail et une poignée (14, 16) fixée de façon rigide à celle-ci, un moyen à pivot reliant de façon pivotante lesdits éléments entre eux, et un ressort poussant les éléments de façon angulaire à l'écart l'un de l'autre, le moyen à pivot comprenant deux pièces filetées (17, 18) montées en contact mutuel et reliées auxdits éléments (11, 12) pour serrer lesdits éléments l'un contre l'autre, caractérisé par une vis sans fin (22) montée de manière rotative dans un support (29, 29'), le support étant fixé à une première pièce (17) desdites pièces filetées, un engrenage (23) en engrènement avec ladite vis sans fin (22), ledit engrenage étant fixé à la seconde pièce filetée (18) pour tourner avec elle, et l'arrangement étant tel que la rotation de la vis sans fin (22) par rapport audit support (29, 29') entraîne une rotation relative des pièces filetées (17, 18) ce qui fait ainsi varier la pression d'un élément (11) contre l'autre élément (12).

2. Outil à main selon la revendication 1, caractérisé en ce qu'un bouton moleté (34) est fixé à la vis sans fin (22) à une extrémité de celle-ci.

3. Outil à main selon la revendication 1 ou revendication 2, caractérisé en ce qu'un couvercle (25), fixé à la seconde pièce filetée (18) et visible, porte une marque d'indication (25a) de sorte que le sens de rotation de la marque d'indication indique si la pression d'un élément contre l'autre élément est augmentées ou diminuée.

4. Outil à main selon l'une quelconque des revendications précédentes, caractérisé en ce que l'un desdits éléments (11, 12) a un cliquet (30) monté de manière rotative dessus, le cliquet ayant une surface de came (31b) dessus qui est non circulaire autour de l'axe du cliquet, et l'autre desdits éléments a un surface courbe (13a) dessus qui est généralement courbée autour de l'axe du moyen à pivot mais qui est espacée de l'axe du cliquet par des distances qui augmentent avec l'augmentation de l'ouverture angulaire des éléments, le cliquet pouvant tourner pour amener la surface de came du cliquet en contact avec ladite surface courbe de l'autre desdits éléments dans toute position relative sélectionnée des éléments pour empêcher une séparation angulaire supplémentaire des éléments.

EP 0 225 689 B1

FIG. 1.

FIG. 4.

FIG.2.

FIG.3.

FIG. 5.

FIG.6.